# EUROPÄISCHE PATENTANMELDUNG

(11) **EP 4 478 772 A1**
(43) Veröffentlichungstag der Anmeldung: **18.12.2024**
(21) Anmeldenummer: 23196640.9
(22) Anmeldetag: 11.09.2023
(51) Int. Cl.: H04W 24/02, G05B 19/418

(54) **VERFAHREN ZUR EINRICHTUNG EINES INDUSTRIELLEN NETZWERKS UND NETZWERKKONFIGURATIONSEINHEIT**

(30) Priorität: 13.06.2023 EP 23179010
(71) Anmelder: Siemens Aktiengesellschaft, 80333 München (DE)
(72) Erfinder: Sauer, Markus, 81739 München (DE); Zeiger, Florian, 85635 Höhenkirchen-Siegertsbrunn (DE)
(74) Vertreter: Siemens Patent Attorneys

(57) **Zusammenfassung**

Bei dem Verfahren zur Einrichtung eines industriellen Netzwerks einer industriellen Anlage mit einer Basisinfrastruktur mit mindestens einer ersten Basisfunkstation wird die industrielle Anlage herangezogen, um eine Sollkonfiguration des industriellen Netzwerks zu bestimmen und es wird die Sollkonfiguration des industriellen Netzwerks mittels mindestens eines Endgeräts realisiert, welches als zusätzliche zweite Basisfunkstation/en herangezogen wird.

## Beschreibung

Die Erfindung betrifft ein Verfahren zur Einrichtung eines industriellen Netzwerks und eine Netzwerkkonfigurationseinheit.

Es ist bekannt, industrielle Anlagen, insbesondere industrielle Fertigungsanlagen, nicht statisch einzurichten, sondern dynamisch neu zu konfigurieren, um sich ändernden Anforderungen im Prozessablauf und/oder im Materialfluss Rechnung zu tragen.

Eine neue Konfiguration industrieller Anlagen bedingt regelmäßig Anpassungen der Kommunikationsinfrastruktur, d. h. Anpassungen insbesondere eines zugehörigen industriellen Netzwerks in Gestalt eines Kommunikationsnetzwerks.

Es ist daher Aufgabe der Erfindung, ein Verfahren anzugeben, mittels welchem ein industrielles Netzwerk dynamisch und an aktuelle Anforderungen der industriellen Umgebung angepasst eingerichtet werden kann. Ferner ist es Aufgabe der Erfindung, eine Netzwerkkonfigurationseinheit anzugeben, mittels welcher das erfindungsgemäße Verfahren ausgeführt werden kann.

Diese Aufgabe der Erfindung wird mit einem Verfahren mit den in Anspruch 1 angegebenen Merkmalen sowie mit einer Netzwerckonfigurationseinheit mit den in Anspruch 9 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem Verfahren zur Einrichtung eines industriellen Netzwerks einer industriellen Anlage mit einer Basisinfrastruktur mit mindestens einer ersten Basisfunkstation wird die industrielle Anlage herangezogen, um eine Sollkonfiguration des industriellen Netzwerks zu bestimmen und es wird die Sollkonfiguration des industriellen Netzwerks mittels mindestens eines Endgeräts realisiert, welches als zusätzliche zweite Basisfunkstation/en herangezogen wird.

Das erfindungsgemäße Verfahren ermöglicht es, den Aufbau der Netzwerkinfrastruktur eines industriellen Netzwerks, einschließlich ihrer Hardware, dynamisch an die aktuellen Anforderungen des industriellen Netzwerks und der industriellen Anlage anzupassen. Die als zusätzliche zweite Basisfunkstationen herangezogenen Endgeräte können dynamisch in der industriellen Anlage platziert werden, um den Aufbau der Netzwerkinfrastruktur bei Bedarf während der Prozesslaufzeit zu ändern. Erfindungsgemäß wird also ein neuer Freiheitsgrad für Design und Betrieb, insbesondere die Zuverlässigkeit und/oder eine Ressourcenschonung und/oder eine Energieeffizienzoptimierung, eines industriellen Netzwerks einer industriellen Anlage eingeführt und genutzt, um einen weiter optimierten Betrieb von vernetzter Netzwerkinfrastruktur und industrieller Anlage zu erreichen.

Bevorzugt wird bei dem erfindungsgemäßen Verfahren eine gegenüber einem vorherigen Zustand geänderte industrielle Anlage herangezogen, um die Sollkonfiguration des industriellen Netzwerks zu bestimmen. In dieser Weiterbildung kann also dynamisch auf eine Neukonfiguration der industriellen Anlage reagiert werden und das industrielle Netzwerk fortwährend angepasst werden.

Es versteht sich, dass mit einem industriellen Netzwerk im Rahme der vorliegenden Erfindung stets ein industrielles Kommunikationsnetzwerk gemeint ist.

In einer vorteilhaften Weiterbildung des erfindungsgemäßen Verfahrens ist die mindestens eine erste Basisfunkstation zur Kommunikation nach einem Mobilfunkstandard und/oder 5G-Standard und/oder 6G-Standard, insbesondere nach dem 3GPP-Standard, ausgebildet.

Geeigneterweise ist bei dem Verfahren gemäß der Erfindung die zusätzliche zweite Basisfunkstation zur Vermittlung von Kommunikationsverbindungen von zwei oder mehr Endgeräten miteinander ausgebildet. Vorzugsweise ist bei dem erfindungsgemäßen Verfahren die zusätzliche zweite Basisfunkstation zur Vermittlung von Kommunikationsverbindungen mindestens eines Endgeräts mit einer Cloud eines Edge-Cloud-Systems ausgebildet.

Bei dem erfindungsgemäßen Verfahren ist in einer vorteilhaften Weiterbildung die industrielle Anlage ein Fertigungssystem und/oder ein Wartungssystem und/oder ein Logistiksystem.

Bei dem erfindungsgemäßen Verfahren wird in einer vorteilhaften Weiterbildung das Endgerät derart eingerichtet, dass es beim Übernehmen der Funktion als zweite Basisfunkstation von weiteren Endgeräten keine abweichenden oder zusätzlichen Zugangscredentials und/oder Authentisierungsinformationen oder Anmeldeinformationen abfragt und/oder fordert als die erste Basisfunkstation abfragt und/oder fordert. Für weitere Endgeräte unterscheidet in dieser Weiterbildung der Erfindung die Kommunikation mit der zweiten Basisfunkstation also nicht von der Kommunikation mit der ersten Basisfunkstation des industriellen Netzwerks.

Alternativ oder zusätzlich und ebenfalls besonders bevorzugt wird das Endgerät bei dem erfindungsgemäßen Verfahren derart eingerichtet, dass es zur Kommunikation mit weiteren Endgeräten einen oder mehrere andere Kommunikationskanäle nutzt als zur Kommunikation mit der ersten Basisfunkstation. In dieser Weiterbildung müssen sich weitere Endgeräte zur Kommunikation mit der zweiten Basisfunkstation nicht den Kommunikationskanal, den die zweite Basisfunkstation zur Kommunikation mit der ersten Basisfunkstation nutzt, teilen, sondern können einen eigenen Kommunikationskanal ungeteilt und insoweit unbeschränkt nutzen.

Die erfindungsgemäße Netzwerkkonfigurationseinheit ist zur Ausführung eines Verfahrens zur Einrichtung eines industriellen Netzwerks einer industriellen Anlage wie vorhergehend beschrieben eingerichtet und weist eine Erfassungseinheit zur Erfassung der industriellen Anlage auf und weist eine Konfigurationsbestimmungseinheit zur Bestimmung einer Sollkonfiguration des industriellen Netzwerks abhängig von der industriellen Anlage auf und weist zudem eine Simulationseinrichtung zur Modellierung des industriellen Netzwerks auf und ist eingerichtet, mindestens ein Endgerät als zusätzliche zweite Basisfunkstation heranzuziehen.

Die erfindungsgemäße Netzwerkkonfigurationseinheit ist bevorzugt eingerichtet, einen ersten Kanal zwischen erster Basisfunkstation und zweiter Basisfunkstation zu etablieren, und eine Verbindung der zweiten Basisstation zu weiteren Endgeräten mittels eines zweiten Kanals zu etablieren. Insbesondere ist die erfindungsgemäße Netzwerkkonfigurationseinheit ausgebildet, die zweite Basisstation zur Etablierung des zweiten Kanals mit den weiteren Endgeräten aufzufordern.

Die erfindungsgemäße Netzwerkkonfigurationseinheit ermöglicht es, den Aufbau der Netzwerkinfrastruktur des industriellen Netzwerks, einschließlich der Hardware, dynamisch an die aktuellen Anforderungen des industriellen Netzwerks und der industriellen Anlage mittels des zuvor beschriebenen erfindungsgemäßen Verfahrens anzupassen. Die als zusätzliche zweite Basisfunkstationen herangezogenen Endgeräte können dynamisch in den industriellen Umgebungen platziert werden, um den Aufbau der Netzwerkinfrastruktur bei Bedarf während der Prozesslaufzeit zu ändern. Erfindungsgemäß wird also ein neuer Freiheitsgrad für Design und Betrieb, insbesondere die Zuverlässigkeit und/oder eine Ressourcenschonung und/oder eine Energieeffizienzoptimierung, eines industriellen Netzwerks einer industriellen Anlage eingeführt und genutzt, um einen weiter optimierten Betrieb von vernetzter Netzwerkinfrastruktur und industrieller Anlage zu erreichen.

Zweckmäßig ist unter einem Heranziehen als zusätzliche zweite Basisfunkstation im Rahmen der vorliegenden Erfindung zu verstehen, dass das Endgerät mit weiteren Endgeräten als zusätzliche zweite Basisfunkstation kommunizieren kann. Besonders bevorzugt wird bei dem erfindungsgemäßen Verfahren die zweite Basisfunkstation derart eingerichtet, dass sie von Endgeräten zur Nutzung der zweiten Basisfunkstation keine abweichenden oder zusätzlichen Zugangscredentials und/oder Authentisierungsinformationen oder Anmeldeinformationen abfragt und/oder fordert als die erste Basisfunkstation abfragt und/oder fordert. Für weitere Endgeräte unterscheidet sich die Kommunikation mit der zweiten Basisfunkstation also nicht von der Kommunikation mit der ersten Basisfunkstation des industriellen Edge-Cloud-Systems.

Alternativ oder zusätzlich und ebenfalls besonders bevorzugt wird das Endgerät derart als zweite Basisfunkstation herangezogen und eingerichtet, dass es zur Kommunikation mit weiteren Endgeräten einen oder mehrere andere Kommunikationskanäle nutzt als zur Kommunikation mit der ersten Basisfunkstation. In dieser Weiterbildung müssen sich weitere Endgeräte zur Kommunikation mit der zweiten Basisfunkstation nicht den Kommunikationskanal, den die zweite Basisfunkstation zur Kommunikation mit der ersten Basisfunkstation nutzt, teilen, sondern können einen eigenen Kommunikationskanal ungeteilt und insoweit unbeschränkt nutzen.

Zweckmäßig wird bei dem erfindungsgemäßen Verfahren und/oder der erfindungsgemäßen Netzwerkkonfigurationseinheit das Endgerät derart eingerichtet, dass es beim Übernehmen der Funktion als zweite Basisfunkstation von weiteren Endgeräten keine abweichenden oder zusätzlichen Zugangscredentials und/oder Authentisierungsinformationen oder Anmeldeinformationen abfragt und/oder fordert als die erste Basisfunkstation abfragt und/oder fordert. Für weitere Endgeräte unterscheidet sich die Kommunikation mit der zweiten Basisfunkstation also nicht von der Kommunikation mit der ersten Basisfunkstation des industriellen Edge-Cloud-Systems.

Alternativ oder zusätzlich und ebenfalls besonders bevorzugt wird das Endgerät derart eingerichtet, dass es zur Kommunikation mit weiteren Endgeräten einen oder mehrere andere Kommunikationskanäle nutzt als zur Kommunikation mit der ersten Basisfunkstation. In dieser Weiterbildung müssen sich weitere Endgeräte zur Kommunikation mit der zweiten Basisfunkstation nicht den Kommunikationskanal, den die zweite Basisfunkstation zur Kommunikation mit der ersten Basisfunkstation nutzt, teilen, sondern können einen eigenen Kommunikationskanal ungeteilt und insoweit unbeschränkt nutzen.

Nachfolgend wird die Erfindung anhand eines in der Zeichnung dargestellten Ausführungsbeispiels näher erläutert.

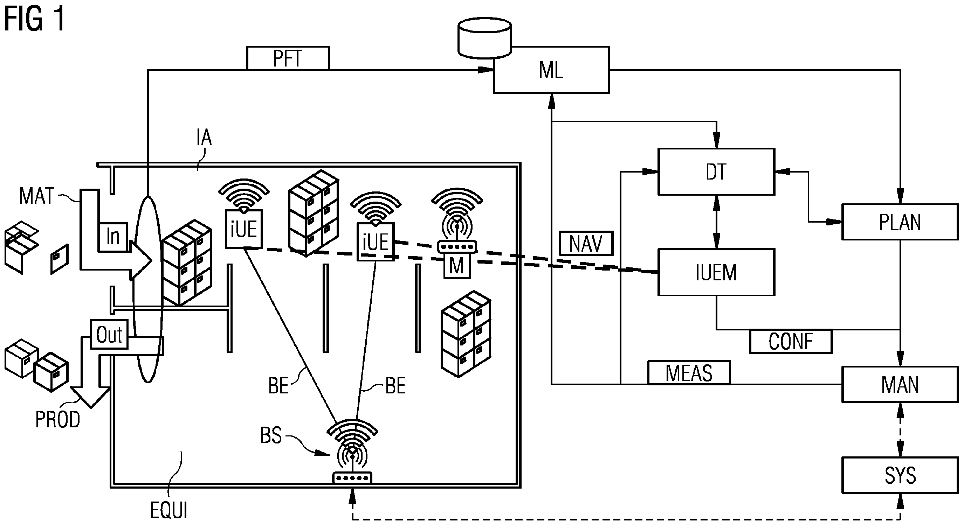

Im in Fig. 1 gezeigten Ausführungsbeispiel wird ein drahtloses industrielles Edge-Cloud-System betrieben. Dieses industrielle Edge-Cloud-System ist im dargestellten Ausführungsbeispiel ein Fertigungssystem. In weiteren, nicht eigens dargestellten Ausführungsbeispielen kann das industrielle Edge-Cloud-System auch ein Wartungssystem oder ein Logistiksystem sein.

Bei dem in Fig. 1 dargestellten Fertigungssystem weisen zahlreiche Fertigungseinrichtungen wie Fertigungsroboter sowie Materialdepots für Material, das von den Fertigungsrobotern verarbeitet wird, auf. Zudem umfasst das Fertigungssystem ein 5G-Mobilfunk-Netzwerk mit einer Basisstation BS für das 5G-Mobilfunk-Netzwerk, welches die Fertigungseinrichtungen des Fertigungssystems mit der Cloud (nicht explizit gezeigt) verbindet. In weiteren, nicht eigens dargestellten Ausführungsbeispielen kann an die Stelle des 5G-Mobilfunk-Netzwerks ein 6G-Mobilfunk-Netzwerk oder ein sonstiges drahtloses Kommunikationsnetzwerk treten.

Das Fertigungssystem umfasst zudem eine Anzahl von mobilen Endgeräten iUE, welche mobil, beispielsweise mittels autonomen Transportfahrzeugen aktiv oder passiv als an weiteren Fertigungseinrichtungen angebrachte Module verfahrbar sind.

Die mobilen Endgeräte iUE stehen mit der Basisstation BS in Funkkontakt oder sind mit der Basisstation BS jedenfalls im Bedarfsfall verbindbar.

Diese mobilen Endgeräte iUE werden im Rahmen der vorliegenden Anmeldung auch als Infrastruktur-Endgeräte bezeichnet und können ihrerseits selbst als mobile Basisstationen BS herangezogen und eingerichtet werden. Dazu eröffnet ein mobiles Endgerät iUE einen ersten Kanal zur Basisstation BS und stellt weiteren Endgeräten des Fertigungssystems mittels eines weiteren, zweiten, Kanals selbst die Funktion einer Basisstation zur Verfügung. Dazu verbinden sich weitere Endgeräte mit dem mobilen Infrastruktur-Endgeräte iUE über diesen zweiten Kanal, während das mobile Infrastruktur-Endgerät iUE die mit den weiteren Endgeräten ausgetauschten Daten nicht selbst an die Cloud weiterleitet, sondern mittels des ersten Kanals an die Basisstation BS übermittelt, die ihrerseits die Verbindung in die Cloud bereitstellt. Dabei fordert das mobile Infrastruktur-Endgerät iUE von den weiteren Endgeräten keine eigenen Zugangscredentials an, sondern leitet die Kommunikation über den ersten Kanal direkt an die Basisstation, d. h. die Zugangscredentials der weiteren Endgeräte zum Zugang zur Basisstation BS können unverändert zum Zugang zum mobilen Infrastruktur-Endgerät iUE verwendet werden.

Bei dem in Fig. 1 dargestellten 5G-Mobilfunk-Netzwerk ist die Konfiguration nicht statisch, sondern die Konfiguration wird kontinuierlich an die sich stets veränderlichen Bedingungen des industriellen Fertigungssystems angepasst. Dazu umfasst das industrielle Fertigungssystem zusätzlich die nachfolgend genannten Komponenten zur Konfiguration des Netzwerks, die zusammenwirkend eine Netzwerkkonfigurationseinheit bilden.

Dazu ist zunächst ein Netzwerkplanungsmodul PLAN vorhanden. Das Netzwerkplanungsmodul PLAN tauscht sich mit einem digitalen Zwilling, der in einem Simulationsmodul DT des 5G-Mobilfunk-Netzwerks implementiert ist, aus und fragt bei geänderten Anforderungen und physikalischer Topologien, die sich aus der Systemdynamik des industriellen Fertigungssystems ergeben, wie beispielsweise die Einbindung neuen Produktionsmaterials oder eine Neuanordnung von Fertigungseinrichtungen (siehe schwarze Kisten in Abbildung 1). So können neue Fertigungseinrichtungen oder die Einbindung neuen Produktionsmaterials bestehende Funkverbindungen blockieren, was eine Neuplanung des 5G-Mobilfunk-Netzwerks während des Betriebs erfordert. Diese neuen Anforderungen werden dann von dem Digitalen Zwilling des Simulationsmoduls DT mittels einer neuen Architektur des 5G-Mobilfunk-Netzwerks gelöst und diese neue Architektur wird zur weiteren Konfiguration zurückerhalten.

Zudem umfasst die Netzwerkkonfigurationseinheiten folgende weitere Komponenten:
Ein Simulationsmodul DT mit dem oben angesprochenen digitalen Zwilling des 5G-Mobilfunk-Netzwerks erhält die oben erwähnten geänderten Anforderungen und physikalische Topologien, die sich aus der Systemdynamik des industriellen Fertigungssystems ergeben und berechnet neue Lösungen. Die neuen Anforderungen werden dem Simulationsmodul DT einerseits vom Netzwerkplanungsmodul PLAN übermittelt und andererseits werden physikalischen Einschränkungen, wie sie sich etwa aus einer der Umlagerung von Material und/oder Fertigungseinrichtungen ergeben, nicht direkt vorgegeben, sondern werden von einem Modellierungsmodul ML zur Verfügung gestellt, welches diese physikalischen Einschränkungen aus einem geänderten Arbeitsplan und einer geänderten Stückliste mittels Modellierung des industriellen Fertigungsprozesses erhält. Das Modellierungsmodul ML modelliert also den industriellen Fertigungsprozess, während das Simulationsmodul DT hingegen die sich daraus ergebenden Konsequenzen für das 5G-Mobilfunk-Netzwerks ermittelt.

Der digitale Zwilling des Simulationsmoduls DT erhält zudem aktuelle Statusdaten der Endgeräte über ein Netzwerk-Management-Modul MAN. Ferner erhält der digitale Zwilling des Simulationsmoduls DT prozessbezogene Informationen von dem Modellierungsmodul ML.

Der digitale Zwilling des 5G-Mobilfunk-Netzwerks berechnet neue Lösungen für Topologien des 5G-Mobilfunk-Netzwerks, einschließlich der Neupositionierung von Infrastruktur-Endgeräte, welche bereits als zusätzliche Basisstationen herangezogen werden oder einer neuen Heranziehung bestehender Infrastruktur-Endgeräte als zusätzliche Basisstationen. Fähigkeiten von als Basisstationen herangezogenen Infrastruktur-Endgeräten, insbesondere in Bezug auf ihre Navigationsfunktionen, ihre jeweilige Position und ihren jeweiligen Zustand werden von einer Endgeräte-Verwaltungskomponente IUEM bezogen. Die Ergebnisse dieser Berechnung werden zum einen an das Netzwerkplanungsmodul PLAN übermittelt und zum anderen an die Endgeräte-Verwaltungskomponente IUEM für die weitere oder neue Konfiguration und Verwaltung der Infrastruktur-Endgeräte.

Die Endgeräte-Verwaltungskomponente IUEM erstellt erforderliche Konfigurationsartefakte auf der Grundlage derjenigen Informationen, die der digitale Zwilling des Simulationsmoduls DT bereitstellt. Diese Konfigurationsartefakte werden an das Netzwerk-Management-Modul MAN für die Implementierung der Konfiguration übermittelt. Darüber hinaus löst die Endgeräte-Verwaltungskomponente IUEM auch die Platzierung der jeweils als Basisstation heranzuziehenden Infrastruktur-Endgeräte aus, entweder durch den manuellen Einsatz durch die Mitarbeiter oder durch eine automatisierte Positionierung, bei den vorliegend mobilen Infrastruktur-Endgeräten etwa mittels autonomer Elektrofahrzeuge.

Die Infrastruktur-Endgeräte iUE sind wie bereits erläutert mobil und können als Basisstationen verwendet werden, um andere Endgeräte mit dem drahtlosen 5G-Mobilfunk-Netzwerk zu verbinden. Infrastruktur-Endgeräte iUE kommunizieren mit stationären Infrastruktur-Basisstationen BS über einen dedizierten drahtlosen Kanal BE für ihre gesamte Backend-Kommunikation. Infrastruktur-Endgeräte können auf verschiedene Arten bereitgestellt werden. Beispiele für den Einsatz sind eine manuelle Befestigung des Infrastruktur-Endgeräts iUE an einer definierten Position eines passiven oder aktiven Ladungsträgers oder der Einsatz eines Infrastruktur-Endgeräts iUE mit eigenem Mobilitätskonzept (z. B. basierend auf einer FTS-Plattform oder einem Schienensystem in einem Lager).

Eine Positionierung der Infrastruktur-Endgeräte iUE erfolgt durch eine Navigation von FTS-Plattformen, an oder auf welchen die Infrastruktur-Endgeräte iUE befestigt, beispielsweise montiert, sind. Eine Positionierung der Infrastruktur-Endgeräte iUE wird regelmäßig durch die Endgeräte-Verwaltungskomponente IUEM automatisch ausgelöst. Dabei erfolgt die Positionierung mittels Navigation des Infrastruktur-Endgerätes iUE an die angegebene Zielposition. Sobald die Zielposition erreicht ist, wird die Endgeräte-Verwaltungskomponente informiert.

## Patentansprüche

1. Verfahren zur Einrichtung eines industriellen Netzwerks in einer industriellen Anlage mit einer Basisinfrastruktur mit mindestens einer ersten Basisfunkstation (BS), bei welchem die industrielle Anlage herangezogen wird, um eine Sollkonfiguration des industriellen Netzwerks zu bestimmen und bei welchem die Sollkonfiguration des industriellen Netzwerks mittels mindestens eines Endgeräts (iUE) realisiert wird, welches als zusätzliche zweite Basisfunkstation herangezogen wird.

2. Verfahren nach Anspruch 1, bei welchem eine gegenüber einem vorherigen Zustand geänderte industrielle Anlage herangezogen wird, um die Sollkonfiguration des industriellen Netzwerks zu bestimmen.

3. Verfahren nach einem der vorhergehenden Ansprüche, bei welchem die mindestens eine erste Basisfunkstation (BS) zur Kommunikation nach einem Mobilfunkstandard und/oder 5G-Standard und/oder 6G-Standard, insbesondere nach dem 3GPP-Standard, ausgebildet ist.

4. Verfahren nach einem der vorhergehenden Ansprüche, bei welchem die zusätzliche zweite Basisfunkstation (iUE) zur Vermittlung von Kommunikationsverbindungen von zwei oder mehr Endgeräten miteinander ausgebildet ist.

5. Verfahren nach einem der vorhergehenden Ansprüche, bei welchem die zusätzliche zweite Basisfunkstation (iUE) zur Vermittlung von Kommunikationsverbindungen mindestens eines Endgeräts mit einer Cloud (CLOUD) des Edge-Cloud-Systems ausgebildet ist.

6. Verfahren nach einem der vorhergehenden Ansprüche, bei welchem die industrielle Anlage ein Fertigungssystem und/oder ein Wartungssystem und/oder ein Logistiksystem ist.

7. Verfahren nach einem der vorhergehenden Ansprüche, bei welchem das Endgerät derart als zweite Basisfunkstation eingerichtet wird, dass es beim Übernehmen der Funktion als zweite Basisfunkstation von weiteren Endgeräten keine abweichenden oder zusätzlichen Zugangscredentials und/oder Authentisierungsinformationen oder Anmeldeinformationen abfragt und/oder fordert als die erste Basisfunkstation abfragt und/oder fordert.

8. Verfahren nach einem der vorhergehenden Ansprüche, bei welchem das Endgerät derart als zweite Basisfunkstation eingerichtet wird, dass es zur Kommunikation mit weiteren Endgeräten einen oder mehrere andere Kommunikationskanäle nutzt als zur Kommunikation mit der ersten Basisfunkstation.

9. Netzwerkkonfigurationseinheit, eingerichtet zur Ausführung eines Verfahrens zur Einrichtung eines industriellen Netzwerks in einer industriellen Anlage nach einem der vorherigen Ansprüche, welche eine Erfassungseinheit zur Erfassung der industriellen Anlage aufweist und welche eine Konfigurationsbestimmungseinheit zur Bestimmung einer Sollkonfiguration des industriellen Netzwerks abhängig von der industriellen Anlage aufweist und welche eine Simulationseinrichtung zur Modellierung des industriellen Netzwerks aufweist und welche eingerichtet ist, mindestens ein Endgerät (iUE) als zusätzliche zweite Basisfunkstation heranzuziehen.

10. Netzwerkkonfigurationseinheit nach dem vorhergehenden Anspruch, welche eingerichtet ist, einen ersten Kanal zwischen erster Basisfunkstation und zweiter Basisfunkstation zu etablieren, und welche die zweite Basisfunkstation (iUE) zur Verbindung zu weiteren Endgeräten mittels eines zweiten Kanals ausgebildet ist.
